# EUROPEAN PATENT SPECIFICATION

(11) **EP 1 962 619 B1**
(45) Date of publication and mention of the grant of the patent: **15.09.2010**
(21) Application number: 06819035.4
(22) Date of filing: 07.12.2006
(51) Int. Cl.: A23L 1/40, A23L 1/00

(54) **CONCENTRATE FOR PREPARING A BOUILLON, SOUP, SAUCE, GRAVY OR FOR USE AS A SEASONING, THE CONCENTRATE COMPRISING PARTICULATES AND XANTHAN AND LOCUST BEAN GUM**
KONZENTRAT ZUR HERSTELLUNG EINER BOUILLON, SUPPE, SAUCE, BRATENSAUCE ODER ALS WÜRZE, WOBEI DAS KONZENTRAT TEILCHENFÖRMIGE BESTANDTEILE SOWIE XANTHAN UND JOHANNISBROTGUMMI ENTHÄLT
CONCENTRÉ PERMETTANT DE PRÉPARER UN BOUILLON, UNE SOUPE, UNE SAUCE, UN JUS OU À UTILISER COMME ASSAISONNEMENT, LE CONCENTRÉ COMPRENANT DES PARTICULES ET DE L'XANTHANE ET DE LA GOMME DE CAROUBE

(30) Priority: 12.12.2005 EP 05077842; 07.06.2006 EP 06115093
(43) Date of publication of application: 03.09.2008
(60) Divisional application: 10163537.3
(73) Proprietor: Unilever N.V., 3013 AL Rotterdam (NL); Unilever PLC, London EC4Y 0DY (GB)
(72) Inventor: ACHTERKAMP, Georg, 74074 Heilbronn (DE); ACKERMANN, Dieter, Kurt, Karl, 74074 Heilbronn (DE); INOUE, Chiharu, NL-3133 AT Vlaardingen (NL); KOHLUS, Reinhard, 74074 Heilbronn (DE); KUHN, Matthias, 74074 Heilbronn (DE)
(74) Representative: Tjon, Hon Kong Guno
(86) International application number: PCT/EP2006/012061
(87) International publication number: WO 2007/068484

(56) References cited:
- WO-A-01/11994
- WO-A-02/35944
- WO-A-97/48290
- US-A- 5 013 573
- US-A- 5 593 716
- US-A- 6 086 937
- US-A1- 2003 044 503
- US-A1- 2004 151 806
- KOVACS P: "USEFUL INCOMPATIBILITY OF XANTHAN GUM WITH GALACTOMANNANS" FOOD TECHNOLOGY, INSTITUTE OF FOOD TECHNOLOGISTS, CHICAGO, IL, US, vol. 27, no. 3, March 1975 (1975-03), pages 26-28,30, XP001057341 ISSN: 0015-6639

## Description

### Field of the invention

The present invention relates to concentrates for preparing a bouillon, broth, soup, sauce, gravy or for use as a seasoning. More in particular, the invention relates to such concentrates which allow the inclusion of herbs, vegetables, meat, fish or crustaceans which are not completely dry.

### Background of the invention

Concentrates for preparing a bouillon, broth, soup, sauce, gravy, or for use as seasoning are well known in the western and non-westem cooking. For brevity, such formulations are herein all abbreviated to "concentrates for preparing a bouillon or for use as a seasoning".

Conventionally, bouillon and seasoning cubes or tablets comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

Such concentrates are conveniently available in the form of rigid or plastic (i.e. deformable) cubes, tablets, crumbly cubes, or as powders, granules, etcetera. These formulations are known as being dry: a moisture content of less than 8%, usually even lower.

Although such dry formulations have advantages in terms of e.g. preservation, they do require all the ingredients to be dry. If ingredients used in such concentrates are not directly available in a dry form (e.g. herbs and vegetables and pieces thereof, pieces of meat), such ingredients need to be dried first. Needless to say, such is both a hassle as well as that it can have a negative impact on the quality of (pieces of) such herbs, vegetables and meat. Hence, there is a need for concentrates for use as seasoning or for preparing a bouillon, broth, soup, sauce, or gravy, which concentrate would allow the use of ingredients, such as for example herbs and/or vegetables and/or fruits or particles thereof as well as pieces of meat, fish or crustaceans, to be in a not completely dry state, i.e. more than 8% (by weight of the herb/vegetable) moisture. Preferably, the concentrates should be shelf stable when in a closed packaging. Preferably, it would allow the use of such ingredients as herbs, vegetables, fruits, meat, fish, crustaceans and particles thereof in the form of intermediate moisture-stabilised ingredients.

WO 2001/072148 discloses cooking aids which are composed of a meltable or dissolvable wall material, enclosing a fluid or pasty filling. Such liquid or pasty filing would allow the use of non-dry herbs and vegetable (particulates) in its filling. However, the manufacture of such filled cubes can be cumbersome.

JP 61/031,068 discloses soup concentrates for use with instant noodles, which soup concentrate is in the form of a jelly, which concentrate needs to be dilluted 5-6 times with water to yield a soup to be consumed or served with noodles. Said jellies are formed with gelatin in combination with one or more of alginate, agar and apple puree. The jellies take 3-6 minutes to dissolve. The jellies in this reference can include meat (pieces) and vegetable (pieces). Although this jelly form allows for non-dry particulates, the jellies disclosed have some disadvantages.

US2003/0044503 relates to a composite food having a gelling agent, possibly selected from gelatin, egg white, modified waxy maize starch, whey protein concentrate, modified potato starch, gellan gum, and rennet casein, and a flavoring and/or texturing component, uniformly distributed throughout, possibly selected from nonfat dry milk, butter, enzyme modified cheese, BBQ seasoning blend, cheddar cheese, sugars, milk protein concentrate, vinegar, and partially hydrogenated soybean oil, with the remainder of the composite made up primarily of water.

US-A-6 086 937 relates to a composition, preferably fat continuous, of a scoopable or spoonable consistency for the preparation of sauces by addition of water and heating, comprising 5-80 parts by weight of fat, 0.5-15 parts by weight of water dispersible milk ingredients, 1-20 parts by weight of starch or a starch-like product, up to 40 parts by weight of water, taste and/or flavor compounds, and, optionally, 0.25-5 parts by weight of gelatin or similar hydrocolloid.

US-A-4 929 456 relates to a process for preparing a melting tolerant portion controlled sauce and seasoning particulate by combining a first mixture of a 5% gelatin solution and seasonings with a second mixture comprising non-solid ingredients such as cream, margarine, cheese, etc. and mixing the combination to form a sauce mixture, followed by heating the sauce mixture to temperatures effective to pasteurize the sauce mixture then depositing individual sauce particulates onto a freezer belt with a drop forming unit drops and freezing same to temperatures ranging from -5 DEG F. to -16 DEG F. following by removing the frozen discrete sauce particulates from the freezer belt for packaging with frozen melts and/or vegetables.

US-A-5 593 716 relates to a liquid sauce, soup or gravy product having high temperature, shear and storage stability and having a smooth texture comprising an aqueous phase and an oil phase. The aqueous phase includes; (a) a dispersed phase of non-starch polysaccharide microgel; and (b) a continuous phase comprising a biopolymer solution.

US-A-5 332 585 relates to a granular food product is prepared by mixing a molten fat with an amylaceous material, extruding the mixture in strands, cooling the strands and then subdividing them Into sections and projecting the sections through a grill to size-reduce the sections into granules.

### Summary of the invention

There is a need for packaged concentrates for use as seasoning or for preparing a bouillon, broth, soup, sauce, or gravy, which concentrate is in the form of a (packaged) jelly, which jelly can dissolve in boiling water fairly quickly (e.g. a mass of 30 g would dissolve in 900 ml boiling water in less than 3.5 minutes, preferably less than 3 minutes). It is also preferred that such jelly has a low tendency to syneresis (water separation) and is preferably an elastic, not too rigid gel (as such will facilitate removal from its packaging; elastic and not too rigid can best be judged by hand-feel). Also it is desired that preferably the gel is not too sticky (as such gel is likely to be handled by fingers and to allow easy removal from the packaging), and a simple method for manufacturing such (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1-50 (i.e. allows for high salt levels in the gel). Also, the product should be fairly stable in transport and storage, which is normally at ambient temperatures, but during which temperatures can rise substantially higher. Preferably, the gel should also have a certain strenghth: preferably the strength should be such that the force (in gram) necessary for a plunger to penetrate 10 mm In a gel is above 50, preferably above 70 g. Also low to no phase separation is desired.

It has now been found that such may be achieved (at least in part) by a packaged concentrate for preparing a bouillon, broth, soup, sauce, gravy or for use as a seasoning, said concentrate comprising:
- 20-80% water (weight % based on total packaged concentrate),
- 0.5-60% by weight of herbs, vegetables, fruits, meat, fish, crustaceans, or particulates thereof, (weight % based on total packaged concentrate),
- 0.1 % to 10% (weight % based on water content of concentrate) of a gelling agent comprising the combination of xanthan and locust bean gum (LBG), xanthan and LBG each being present in an amount of 30-70% on the total amount of xanthan + LBG,
- 3-30% (weight % based on water content of concentrate, more preferably 15-30%, most preferably 15-26%) of salt,
   wherein the concentrate has the appearance of a gel (preferably judged when taken out of the packaging).

The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way). More preferably, the packaged concentrate according to the invention (when taken out of the packaging) has the appearance or rheology of a gel as expressed by a ratio of elastic modulus G': viscous modulus G" of at least 1, preferably at least 3, more preferably at least 5. It can furthermore be preferred that the viscous modulus G" is at least 10 Pa, preferably at least 50 Pa. The method of measuring such is described below.

With "herbs, vegetables, fruits, meat, fish, crustaceans, or particulates thereof" is meant particles having a size such that they are at least visible to the naked eye, in the product as consumed, e.g. upon dillution with water in the required dillution rate (as that is when the particulates or herbs etcetera matter: to be seen just prior to consumption). Thus, "meat powder" as known in the bouillon industry can be difficult to be seen in the jelly cube (e.g. due to the concentration, possible turbidity following certain ingredients), but such conventional meat powder particulates are well visible to the naked eye in the soup or bouillon when prepared in the proper dillution.

Water (as amount) is herein to be understood as the total amount of moisture present. The concentration of salt is to be calculated as (amount of salt) / (amount of salt + total moisture).

The same is true for other dissolved matter, such as gelling agent (amount of gelling agent / (amount of gelling agent + total moisture amount).

It can be preferred that the concentrate according to the present invention comprises 15-30 % (by weight, based on total water content, more preferably 15-26%) salt (preferably NaCl, but also including other salts, preferably in dissolved form). "Salt" in this context can be sodium chloride but it can also be another alkali metal salt such as potassium chloride, or a mixture thereof, or other low-sodium products that aim for the taste impression of sodium chloride, as long as the taste in the end formulation (e.g. bouillon, or seasoned food product) is acceptable. The upper limit of solubility in water of NaCl is around 26% (at room temperature), and hence above this limit some salt crystals may occur. Hence, the amount of salt is preferably (just) below this salt saturation concentration level.

By the above formulation, concentrates for preparing a bouillon, broth, soup, sauce, gravy or for use as a seasoning can be obtained that are different from the conventionally used dry cubes and tablets, in that the concentrates according to the invention are not dry. It allows the use of herbs, vegetables, meat, fish, crustaceans (or particulates thereof) which are partially wet, i.e. not completely dried. What it shares with conventional bouillon cubes and tablets is that it comes in a unit dose format (i.e. not a bulk product like liquid, powder or granules): a portioned amount, individually packaged.

Notwithstanding the fact that the concentrate according to the present invention allows the use of (piece of) herbs, vegetables, meat, fish, crustaceans which are not dry, it is also possible to include such ingredients in dry form in the concentrate according to the present invention. Such dry ingredients may then be to some extent hydrated by the moisture present in the concentrate.

The concentrates are more or less shape stable: it is not an easily flowable product, but it being a gelled product means it can deform (easily) under pressure. By choosing the amount and ratio of xanthan and LBG the desired rheology can be obtained.

The amount and ratio of xanthan and LBG as required will e.g. depend on the amount of salt in the formulation, and such amounts and ratio can be determined by the person of average skill in the art of gelled food products without undue burden. Locust bean gum and xanthan on their own at high salt levels do not really gel, but in combination they do. Typical amounts will be:
- at a salt level of 15%: LBG + xanthan (together): 0.15-5%, more preferably 0.4-2%,
- at a salt level of 25%: LBG + xanthan (together): 0.2-7%, more preferably 0.6-3%, both as wt% on the amount of water as defined above.

LBG and xanthan are herein preferably used in such amounts that the total amount of LBG+xanthan comprises 30-70% LBG and 30-70% xanthan (wt% on total amount of xanthan+LBG). Preferably, these amounts are 40-60% and 60-40%, respectively, and even more preferred 45-55% and 55-45%, respectively. Most preferred ratio is each component in an amount of about 50% and 50%.

The texture or rheologie desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the given product, a ratio of greater than 1 is suitable. It is preferred, however, that said ratio is gerater than 3, more preferably it is gerater than 5.

The absolute value of the viscous modus G" is preferably greater than 10 Pa, more preferred greater than 50 Pa. This criterion distinguishes between thin solutions with gel character and a more shape retaining jelly products that are the intended products according to this invention.

The above given values need should be measured under the following circumstances:
- a maturation time of at least 12 h under ambient conditions,
- measurement temperature of 25 °C,
- an oscillatory frequency of 1 rad/s and
- a strain of 1%.

This set of parameters refers to a standard oscillatory test conducted with a standard state of the art low deformation rheometer as commercially available from e.g. Bohlin or TA Instruments.

The requirements as stated herein for G' : G" should preferably apply to the whole concentrate (apart from the particulates mentioned), and not just for a part of it. For example, for a construction like in WO 01/72148 such may be true for the wall material, but not for the fluid or pasty core. Also, it is preferred that the concentrate does not consist of a solid envelope material covering core. It can also be preferred that the concentrate is translucent and/or transparent, apart from the visual elments like herbs, vegetables, meat, fish, crustaceans (or particulates thereof). Hence, of the matrix material (e.g. comprising water, a gelling agent, and optionally salt, taste enhancers, oil) further comprising the visual elments like herbs, vegetables, meat, fish, crustaceans (or particulates thereof), the matrix material is preferably transparent and/or translucent..

The concentrate according to the invention is preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / litre sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners.

As used herein, "sweetness index" is a term used to describe the level of sweetness of the dosage form relative to sucrose. Sucrose, defined as the standard, has a sweetness index of 1. For example, the sweetness indices of several known sweet compounds are listed below:
Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995".

It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

The herbs, vegetables, meat, fish, crustaceans, or particulates thereof (including mixtures thereof) as applied in the current invention can be intermediate moisture components. Typically, intermediate moisture ingredients will have a water activity a_{w} of 0.5-0.98, preferably 0.6-0.87, more preferably 0.6-0.75.

### Detailed description of the invention

In the concentrates according to the present invention the amount of herbs, vegetables, fruits, meat, fish, crustaceans, or particulates thereof is preferably 1-40%, more preferably 1-20%, most preferably 2-20% (by weight on the total packed concentrate).

The total moisture content of the total concentrate according to the present invention as it is in the packaging (i.e. including the particulates of herbs, vegetables, meat, fish, crustaceans) is 20-80% (by weight, based on total packed concentrate), preferably 40 to 60 % by weight (based on the total packed concentrate). The water activity a_{w} of the total concentrate as it is in the packaging is preferably preferably 0.5-0.98, more preferably 0.6-0.87, even more preferably 0.7-0.8, and most preferably 0.7-0.75. The pH of the total concentrate according to the invention is preferably between 3 and 8, more preferably 4-7. Such pH can be measured after e.g. finely grinding the whole concentrate. In connection to this, it may be preferred that (organic) acids are present. Such may also be the case for taste reasons.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity a_{w} and pH of the composition may ensure such.

Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature. This can be achieved at high salt levels, e.g. at 20-26% salt (on water basis). Hence, such salt level can be preferred.

Next to the ingredients mentioned, it may be preferred for the concentrates according to the present invention that they further comprise 0.5 - 30 % (weight on total concentrate) of a taste enhancer selected from the group of monosodium glutamate, 5'-ribotides, organic acids, or mixtures thereof. Salt can also be seen as a taste enhancer, but is herein regarded as a separate category of ingredients.

Fats and/or oils may be used as an ingredient in the concentrates according to the present invention. They may contribute to flavour and/or mouthfeel. Due to the aqueous nature of the concentrates, such fat is preferably present in an emulsified or dispersed form. Use of emulsifers and/or stabilisers may be desired. Hence, it may be preferred that the concentrate according to the present invention further comprises 1-30% (weight on total packaged concentrate) of emulsified or dispersed oil and/or fat, preferably 1-15%.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1g-10 kg, preferably 2-250 g, more preferably 10-50 g. The portion of the concentrate according to the present invention as packaged is preferably such that the concentrate has a weight excluding packaging) of 1g-10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

The packaged concentrates according to the present invention are preferably translucent or transparent. This can also make it attractive to choose e.g. packaging which is at least partially transparent.

The invention further relates to a process for the preparation of the concentrates according to the present invention. A process for the preparation may comprise the steps of mixing the ingredients with the water, filling into the packaging (e.g. blister packs or cups or tubs) and closing the packs (e.g. by a seal), whereby preferably a heating step is applied prior to, during or after filling into the packaging, for preservation purposes and/or to facilitate dissolution of ingredients and/or achieving gelation (upon cooling thereafter) of thermoset gels. Alternatively, the (heated) mixture may be poured in moulds, cooled to set. After setting to a gel, the gelled concentrate will have to be removed from the moulds and packaged. It is preferred, however, to manufacture directly into the packaging. It is preferred that the steps of mixing the ingredients with the water, filling into the packaging and closing the packaging, whereby a heating step is applied prior to, and/or during and/or after filling into the packaging.

In the above process, it is preferred that at least part of the heating stage is to a temperature of at least 80°C. Also, it is preferred that the temperature of the mixture during the filling is at least 70°C. When fat is used solid at room temperature, it is preferably melted first before adding to other components.

The invention further relates to the use of a concentrate as set out above, for preparing a bouillon, broth, soup, sauce, gravy or for use as a seasoning. This may be done by diluting with an aqueous liquid (e.g. water) under application of heat, in e.g. a ratio of 1:15 - 1: 100, preferably 1:20 - 1:70, more preferably 1:20 - 1:50.

The invention further relates to the use of the concentrate according to the present invention and as set out above for preparing a bouillon, broth, soup, sauce, gravy or for use as a seasoning. Such use e.g. implies removing the concentrate from its packaging, and adding it to food or a dish, either during or after its preparation, optionally further applying heat and/or stirring the food or dish with such concentrate.

### Examples

### Example 1: medium salt jelly with xanthan + LBG and fresh vegetables

| | **Recipe Dry Base Mix** |
|---|---|
| **Ingredient** | **kg** |
| vegetable flavour | 7.500 |
| yeast extract | 1.200 |
| IG | 0.400 |
| Sugar | 8.000 |
| MSG | 8.000 |
| Salt | 10.000 |
| Spices | 2.400 |
| vegetable powders | 3.200 |
| Acidifier | 1.000 |
| | |
| | 41.70 |

| | **Recipe Jelly** |
|---|---|
| **Ingredient** | **kg** |
| Dry Base Mix | 41.700 |
| Water | 50.000 |
| Xanthan | 0.500 |
| LGB | 0.500 |
| frozen vegebles | |
| Carrot grits | 6.000 |
| Parsley leaves frozen | 3.000 |
| Leek pieces | 5.000 |
| Onion pieces frozen | 7.000 |
| | 113.700 |

### Process Dry Mix

Add all dry ingrdients into a Lödige Mixer
Mix dry powders at 120rpm without chopper for 5min until homogeneous
Pack into plastic bags
Close and store at ambient temperature

### Process Jelly

Add water into a vessel (Unimix)
Add xanthan and LBG
Continue mixing for 30min
Add dry mix and mix still homogenuous
Heat up to 95°C
Add frozen vegetables
Heat up to 95°C
Keep at 95°C for 5min
Hot filling into glas jars of 50ml
Capping of glass jars
Cooling down at room temperature for 24h.

### Example 2: high salt jelly with xanthan + LBG

| | **Recipe Dry Base Mix** |
|---|---|
| **Ingredient** | **Kg** |
| Chicken flavour | 8.400 |
| Chicken meat powder | 3.000 |
| Yeast extract | 1.200 |
| IG | 0.400 |
| Carrot grits | 0.900 |
| Sugar | 10.200 |
| Onion pieces | 3.000 |
| Leek pieces | 1.000 |
| Maltodextrin | 8.500 |
| MSG | 17.000 |
| Parsley leaves | 1.300 |
| Salt | 35.000 |
| Spices | 2.400 |
| Vegetables powders | 1.700 |
| Potato starch | 6.000 |
| | 100.00 |

| | **Recipe Jelly** |
|---|---|
| **Ingredient** | **Kg** |
| Dry Base Mix | 50.000 |
| Water | 50.000 |
| Xanthan | 0.400 |
| LGB | 0.400 |
| | 100.800 |

### Process Dry Mix

Add all dry ingrdients into a Lödige Mixer
Mix dry powders at 120rpm without chopper for 5min until homogeneous
Pack into plastic bags
Close and store at ambient temperature

### Process Jelly

Add water into a vessel (Unimix)
Add xanthan and LBG
Continue mixing for 30min
Add dry mix and mix still homogeneous
Heat up to 90°C
Keep at 90°C for 10min
Hot filling into glas jars of 40ml
Capping of glass jars
Cooling down at room temperature for 24h.

The resulting products of both examples 1 and 2 had the appearance of a gel and were shape stable.

### Example 3:

Dry mix (g):
375 g salt
200 g palm fat
175 g MSG
27.45 g flavouring components, spices and taste enhancers

Vegetable mix (g):
220 g frozen grated carrots
110 g frozen grated leek
70 g frozen grated spinach
50 g frozen grated bell pepper
30 g frozen grated pumpkin
20 g frozen grated celery
15 g frozen grated corn

Gelling system:
700 g water
8 g xanthan
3.5 g LBG

A product was made by mixing all ingredients, heating to 80°C, pouring in moulds and cooling to set. The resulting product looked like a gel, was shape stable, and 15 g of the gel dissolved in less than 2 minutes when immersed in boiling water (dillution 30 times).

**Examples 4-7:** several bouillon concentrates have been prepared with varying taste according to the recipes as described below. Moisture was added as water, all other ingredients are used in a dry form (that is: commercially dry, which usually means for such ingredients 1-3% of moisture). The a_{w} and G' and G"have been measured: these results are given after example 4. All four products appeared as gels.

**Example 4: Beef Jelly with LBG+xanthan**

| Description | Amount [%] | Amount [g] for 10kg |
|---|---|---|
| Sugar | 2 | 0.2 |
| Salt | 18.4 | 1.84 |
| Flavour | 4.9 | 0.49 |
| Citric Acid powder | 0.5 | 0.05 |
| Vegetable powder | 0.45 | 0.045 |
| Yeast extract | 1.5 | 0.15 |
| Spices | 0.2 | 0.02 |
| 5'-ribotides | 0.2 | 0.02 |
| MSG | 5.1 | 0.51 |
| Palm fat | 10.5 | 1.05 |
| Water | 55.38 | 5.535 |
| Xanthan | 0.3 | 0.03 |
| Locus Bean Gum | 0.3 | 0.03 |
| Total | 100 | 10 |

Process Description:
1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water into the vessel and close the vessel.
6. Heat up to 90°C while stirring
7. Keep at 90°C for 3min while stirring
8. Hot filling into oval tubs of 35ml size, followed by sealing and leaving to cool to room temperature.

Example 5: Fish Jelly with LBG+xanthan

| Description | Amount [%] | Amount [g] for 10kg |
|---|---|---|
| Fish powder | 8 | 0.8 |
| Flavour | 0.5 | 0.05 |
| Palm fat | 5.8 | 0.58 |
| Creamer powder | 16.1 | 1.61 |
| Spices | 0.1 | 0.01 |
| Lactid acid (liquid) | 0.6 | 0.06 |
| Water | 40 | 4 |
| Modified starch | 3.5 | 0.35 |
| Salt | 13.1 | 1.31 |
| MSG | 4.4 | 0.44 |
| Locus Bean Gum | 0.5 | 0.05 |
| Xanthan | 0.5 | 0.05 |
| Sugar | 6.6 | 0.66 |
| 5'-ribotides | 0.2 | 0.02 |
| Caramel powder | 0.1 | 0.01 |
| Total | 100 | 10 |

Process Description:
1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water and lactic acid into the vessel and close the vessel.
6. Heat up to 90°C while stirring
7. Keep at 90°C for 3min while stirring
8. Hot filling into oval tubs of 35ml size, followed by sealing and leaving to cool to room temperature.

Example 6: Chicken Jelly (LBG+xanthan)

| Description | Amount [%] | Amount [g] for 10kg |
|---|---|---|
| Chicken extract | 3.2 | 0.32 |
| Chicken meat powder | 7.3 | 0.73 |
| Chicken fat | 16.1 | 1.61 |
| Spices | 0.4 | 0.04 |
| Water | 44.4 | 4.44 |
| Flavour | 1.3 | 0.13 |
| Salt | 17.3 | 1.73 |
| MSG | 4 | 0.4 |
| Locus Bean Gum | 0.5 | 0.05 |
| Xanthan | 0.5 | 0.05 |
| Sugar | 4.8 | 0.48 |
| 5'-ribotides | 0.2 | 0.02 |
| Total | 100 | 10 |

Process Description:
1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water and lactic acid into the vessel and close the vessel.
6. Heat up to 90°C while stirring
7. Keep at 90°C for 3min while stirring
8. Hot filling into round tubs of 15ml size, followed by sealing and leaving to cool to room temperature.

Example 7: Pork Jelly with LBG+xanthan

| Description | Amount [%] | Amount [g] for 10kg |
|---|---|---|
| Pork Flavour | 1.5 | 0.15 |
| Water | 41.5 | 4.15 |
| Pork fat | 12.1 | 1.21 |
| Pork meat powder | 6.1 | 0.61 |
| Salt | 13.6 | 1.36 |
| MSG | 5.3 | 0.53 |
| Locus Bean Gum | 0.5 | 0.05 |
| Xanthan | 0.5 | 0.05 |
| Sugar | 3.8 | 0.38 |
| Palm fat | 3 | 0.3 |
| Pork bone powder | 12.1 | 1:21 |
| Total | 100 | 10 |

Process Description:
1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water into the vessel and close the vessel.
6. Heat up to 90°C while stirring
7. Keep at 90°C for 3min while stirring
8. Hot filling into round tubs of 15ml size, followed by sealing and leaving to cool to room temperature

Results examples 4-7: ratio G'/G" at 21 °C (ambient, as measured following the instructions in the description):

| Recipe | Storage modulus G' (Pa) | Loss modulus G" (Pa) | Ratio G'/G" | a_{w} | Dillution rate | Dillution time (s) | syneresis |
|---|---|---|---|---|---|---|---|
| | | | | | | | |
| Beef | 75.48 | 14.41 | 5.24 | 0.68 | 28 | 90 | Low |
| Fish | 1061.50 | 186.70 | 5.69 | 0.74 | 26 | 180 | Very low |
| Chicken | 187.50 | 39.55 | 4.74 | 0.73 | 29 | 120 | Low |
| Pork | 466.29 | 100.38 | 4.65 | 0.73 | 30 | 90 | Very low |

The gel strength was measured using the following method:
- using a texture analyser from Microstable Sytems, model TA XT2 with 5 kg load cell.
- Plunger: Diameter (according AOAC method) 0.5 inches means 12.7 mm, height 35 mm, plane surface, sharp edges, material plastics.
- Sample Containers have an influence on results if not very large. Therefore the choosen container should always be the same. We have used plastic containers for model systems (diameter bottom 5.5 cm; diameter top 6.5 cm; height 8.5 cm) and glass jars for process trials with recipes other than model systems (diameter 7 cm; height 4 cm).
- After preparation, samples have been stored at ambient conditions (21 °C) at least over night before measurement.
- TA-Parameters: Pre speed 1 mm/s, Test speed 0.5 mm/s, Re speed 10 mm/s, Distance 15 mm, Trigger Auto, Force 0.5 g, Stop recording at target. Result we take from the recorded graph is force at 10 mm penetration depth (should be in N, but simplified in g).

## Claims

1. Packaged concentrate for preparing a bouillon, broth, soup, sauce, gravy or for use as a seasoning, said concentrate comprising:
- 20-80% water (weight % based on total packaged concentrate),
- 0.5-60% by weight of herbs, vegetables, fruits, meat, fish, crustaceans, or particulates thereof, (weight % based on total packaged concentrate),
- 0.1% to 10% (weight % based on water content of concentrate) of a gelling agent comprising the combination of xanthan and locust bean gum (LBG) whereby the concentration of gelling agent is to be calculated as (amount of gelling agent / (amount of gelling agent + total moisture amount),
- 15-30% (weight % based on water content of concentrate, more preferably 15-26%) of salt, whereby the concentration of salt is to be calculated as (amount of salt) / (amount of salt + total moisture),
wherein the concentrate has the appearance of a gel.

2. Concentrate according to claim 1, wherein xanthan and LBG are each present in an amount of 30-70% on the total amount of xanthan + LBG.

3. Concentrate according to claim 1 or 2, wherein the concentrate has the rheology of a gel.

4. Concentrate according to claim 1-3, wherein wherein the concentrate has the appearance or rheology of a gel as expressed by the ratio of elastic modulus G' : viscous modulus G" of at least 1, preferably at least 3.

5. Concentrate according to claim 1-4, wherein viscous modulus G" is at least 10 Pa.

6. Concentrate according to claim 5, wherein the viscous modulus G" is at least 50 Pa.

7. Concentrate according to claim 1-6, wherein the amount of a gelling agent comprising the combination of xanthan and locust bean gum (LBG) is 0.2-7%, preferably 0.6-3%,
whereby the concentration of gelling agent is to be calculated as (amount of gelling agent / (amount of gelling agent + total moisture amount).

8. Concentrate according to claim 1-7, wherein xanthan and LBG each being present in an amount of 40-60% on the total amount of xanthan + LBG, preferably in an amount of 45-55%, more preferably an amount of about 50%.

9. Concentrate according to claim 1-8, wherein the total moisture content of the concentrate is 40-60% by weight (based on the total packed concentrate).

10. Concentrate according to claim 1-9, wherein the concentrate has a water activity a_{w} of 0.6 to 0.87, preferably 0.7-0.8.

11. Concentrate according to claim 1-10, further comprising 0.5 to 30% (weight on total concentrate) of a taste enhancer selected from the group of monosodium glutamate, 5'-ribotides, organic acids, or mixtures thereof.

12. Concentrate according to claim 1-11, further comprising 1-30%, preferably 1-15% (weight on total packaged concentrate) of emulsified oil and/or fat.

13. Concentrate according to claim 1-12, wherein the concentrate is in the form of a cube, tablet, pellet, ball, briquette, dragee.

14. Concentrate according to claim 1-13, wherein the concentrate is packaged in a cup or tub with a seal.

15. Concentrate according to claim 1-14, wherein the portion of the concentrate as packaged is such that the concentrate has a weight (excluding packaging) of 10g-10 kg.

16. Concentrate according to claim 1-15, wherein the concentrate provides a bouillon, broth, soup, sauce, gravy by diluting said concentrate with an aqueous liquid under application of heat, preferably in a ratio of 1:15 -1: 50.

17. Concentrate according to claim 1-16, whereby 30 g of the concentrate dissolves in 900 ml boiling water in less than 3.5 minutes, preferably less than 3 minutes.

18. Concentrate according to claim 1-17, wherein the concentrate is a concentrated bouillon.

19. Concentrate according to claim 18, wherein the concentrated bouillon provides a bouillon by diluting said concentrated bouillon with an aqueous liquid under application of heat, said concentrated bouillon comprising
- 20-80% water (weight % based on total packaged concentrate),
- 0.5-60% by weight of herbs, vegetables, fruits, meat, fish, crustaceans, or particulates thereof, (weight % based on total packaged concentrate),
- 0.6% to 7% (weight % based on water content of concentrate) of a gelling agent comprising the combination of xanthan and locust bean gum (LBG), whereby the concentration of gelling agent is to be calculated as (amount of gelling agent / (amount of gelling agent + total moisture amount),
- 15-30% (weight % based on water content of concentrate, more preferably 15-26%) of salt, whereby the concentration of salt is to be calculated as (amount of salt) / (amount of salt + total moisture),
wherein the concentrate has the appearance or rheology of a gel as expressed by the ratio of elastic modulus G' : viscous modulus G" of at least 1.
- wherein the portion of the concentrate as packaged is such that the concentrate has a weight (excluding packaging) of 10g-10 kg.

20. Concentrate according to claim 19 further comprising 1-30%, preferably 1-15% (weight on total packaged concentrate) of emulsified oil and/or fat.

21. Concentrate according to claim 19 or 20, wherein the concentrated bouillon provides a bouillon by diluting said concentrated bouillon with an aqueous liquid under application of heat in a ratio of 1:15-1: 50.

22. Process for preparing a concentrate for preparing a bouillon, broth, soup, sauce, gravy or for use as a seasoning, said concentrate comprising:
• 20-80% water (weight % based on total packaged concentrate),
• 0.5-60% by weight of herbs, vegetables, fruits, meat, fish, crustaceans, or particulates thereof, (weight % based on total packaged concentrate),
• 0.1 % to 10% (weight % based on water content of concentrate, preferably 0.2-7%, more preferably 0.6-3%) of a gelling agent comprising the combination of xanthan and locust bean gum (LBG) whereby the concentration of gelling agent is to be calculated as (amount of gelling agent / (amount of gelling agent + total moisture amount),
• 15-30% (weight % based on water content of concentrate, more preferably 15-26%) of salt, whereby the concentration of salt is to be calculated as (amount of salt) / (amount of salt + total moisture),
wherein the concentrate has the appearance of a gel, the process comprising the steps of mixing the ingredients with the water, filling into the packaging and closing the packs, whereby preferably a heating step is applied prior to, during or after filling into the packaging.

23. Process according to claim 22, wherein xanthan and LBG are each present in an amount of 30-70% (preferably 40-60%, more preferably about 50%) on the total amount of xanthan + LBG.

24. Process according to claim 22 or 23, wherein at least part of the heating stage is to a temperature of at least 70°C.

25. Use of a concentrate according to claim 1-19, for preparing a bouillon or soup.

26. Use according to claim 25, wherein the concentrate is a concentrated bouillon and provides a bouillon by diluting said concentrated bouillon with an aqueous liquid under application of heat, said concentrated bouillon comprising
- 20-80% water (weight % based on total packaged concentrate),
- 0.5-60% by weight of herbs, vegetables, fruits, meat, fish, crustaceans, or particulates thereof, (weight % based on total packaged concentrate),
- 0.6% to 7% (weight % based on water content of concentrate) of a gelling agent comprising the combination of xanthan and locust bean gum (LBG), whereby the concentration of gelling agent is to be calculated as (amount of gelling agent / (amount of gelling agent + total moisture amount),
- 15-30% (weight % based on water content of concentrate, more preferably 15-26%) of salt, whereby the concentration of salt is to be calculated as (amount of salt) / (amount of salt + total moisture),
wherein the concentrate has the appearance or rheology of a gel as expressed by the ratio of elastic modulus G' : viscous modulus G" of at least 1.
- wherein the portion of the concentrate as packaged is such that the concentrate has a weight (excluding packaging) of 10g- 250g.

27. Use according to claim 26 wherein the concentrated bouillon further comprises 1-30%, preferably 1-15% (weight on total packaged concentrate) of emulsified oil and/or fat.

28. Use according to claim 26 or 27, wherein the concentrated bouillon provides a bouillon by diluting said concentrated bouillon with an aqueous liquid under application of heat in a ratio of 1:15 -1:50.

29. Method for preparing a bouillon comprising the step of diluting a concentrate according to any one of claims 1 to 21 whereby said concentrate is diluted with an aqueous liquid under application of heat.

30. Method according to claim 29 whereby said concentrate is diluted in a ratio of 1:15 -1: 50.

## Patentansprüche

1. Abgepacktes Konzentrat zur Herstellung einer Bouillon, einer Brühe, einer Suppe, einer Soße, einer Bratensoße oder zur Verwendung als Würze, wobei das Konzentrat umfasst:
- 20-80% Wasser (Gewichts-%, bezogen auf das gesamte abgepackte Konzentrat),
- 0,5-60 Gewichts-% Kräuter, Gemüse, Früchte, Fleisch, Fisch, Krustentiere oder teilchenförmige Bestandteile davon (Gewichts-%, bezogen auf das gesamte abgepackte Konzentrat),
- 0,1-10% (Gewichts-%, bezogen auf den Wassergehalt des Konzentrats) eines Geliermittels, das die Kombination aus Xanthan und Johannisbrotgummi (locust bean gum (LBG)) umfasst, wobei die Konzentration des Geliermittels zu berechnen ist als (Menge des Geliermittels / (Menge des Geliermittels + Gesamtfeuchtigkeitsmenge),
- 15-30% (Gewichts-%, bezogen auf den Wassergehalt des Konzentrats, bevorzugter 15-26%) Salz, wobei die Konzentration des Salzes zu berechnen ist als (Menge des Salzes) / (Menge des Salzes + Gesamtfeuchtigkeit),
wobei das Konzentrat das Aussehen eines Gels hat.

2. Konzentrat nach Anspruch 1, wobei Xanthan und LBG jeweils in einer Menge von 30-70%, bezogen auf die gesamte Menge von Xanthan + LBG, vorliegen.

3. Konzentrat nach Anspruch 1 oder 2, wobei das Konzentrat die Rheologie eines Gels hat.

4. Konzentrat nach Anspruch 1 bis 3, wobei das Konzentrat das Aussehen eines Gels oder die Rheologie eines Gels hat, wie es/sie durch das Verhältnis von Elastizitätsmodul G': viskoser Modul G" von wenigstens 1, vorzugsweise wenigstens 3 ausgedrückt wird.

5. Konzentrat nach Anspruch 1 bis 4, wobei der viskose Modul G" wenigstens 10 Pa beträgt.

6. Konzentrat nach Anspruch 5, wobei der viskose Modul G" wenigstens 50 Pa beträgt.

7. Konzentrat nach Anspruch 1 bis 6, wobei die Menge des Geliermittels, das die Kombination aus Xanthan und Johannisbrotgummi (LBG) umfasst, 0,2-7%, vorzugsweise 0,6 bis 3%, ist, wobei die Konzentration des Geliermittels zu berechnen ist als (Menge des Geliermittels / (Menge des Geliermittels + Gesamtfeuchtigkeitsmenge).

8. Konzentrat nach Anspruch 1 bis 7, wobei Xanthan und LBG jeweils in einer Menge von 40-60%, bezogen auf die gesamte Menge an Xanthan + LBG, vorzugsweise in einer Menge von 45-55%, stärker bevorzugt in einer Menge von etwa 50%, vorliegen.

9. Konzentrat nach Anspruch 1 bis 8, wobei der gesamte Feuchtigkeitsgehalt des Konzentrates 40-60 Gewichts-% (bezogen auf das gesamte abgepackte Konzentrat) ist.

10. Konzentrat nach Anspruch 1 bis 9, wobei das Konzentrat eine Wasseraktivität a_{w} von 0,6 bis 0,87, vorzugsweise 0,7 bis 0,8, hat.

11. Konzentrat nach Anspruch 1 bis 10, das außerdem 0,5 bis 30% (Gewichts-%, bezogen auf das gesamte Konzentrat) eines Geschmacksverstärkers, ausgewählt aus der Gruppe aus Mononatriumglutamat, 5'-Ribotiden, organischen Säuren oder Gemischen davon, umfasst.

12. Konzentrat nach Anspruch 1 bis 11, das außerdem 1 bis 30%, vorzugsweise 1 bis 15% (Gewichts-%, bezogen auf das gesamte abgepackte Konzentrat) an emulgiertem Öl und/oder Fett umfasst.

13. Konzentrat nach Anspruch 1 bis 12, wobei das Konzentrat in Form eines Würfels, einer Tablette, eines Pellets, eines Balls, eines Briketts, eines Dragees ist.

14. Konzentrat nach Anspruch 1 bis 13, wobei das Konzentrat in einem Becher oder einem Bottich mit einer Versiegelung abgepackt ist.

15. Konzentrat nach Anspruch 1 bis 14, wobei die Portion des Konzentrates, wie es abgepackt ist, so ist, dass das Konzentrat ein Gewicht (ausschließlich Verpackung) von 10 g bis 10 kg hat.

16. Konzentrat nach Anspruch 1 bis 15, wobei das Konzentrat eine Bouillon, eine Brühe, eine Suppe, eine Soße, eine Bratensoße liefert, indem das Konzentrat mit einer wässrigen Flüssigkeit unter Anwendung von Wärme verdünnt wird, vorzugsweise in einem Verhältnis von 1:15 - 1:50.

17. Konzentrat nach Anspruch 1 bis 16, wobei sich 30 g des Konzentrats in 900 ml kochendem Wasser in weniger als 3,5 Minuten, vorzugsweise weniger als 3 Minuten, lösen.

18. Konzentrat nach Anspruch 1 bis 17, wobei das Konzentrat eine konzentrierte Bouillon ist.

19. Konzentrat nach Anspruch 18, wobei die konzentrierte Bouillon eine Bouillon liefert, indem die konzentrierte Bouillon mit einer wässrigen Flüssigkeit unter Anwendung von Wärme verdünnt wird, wobei die konzentrierte Bouillon umfasst
- 20 bis 80% Wasser (Gewichts-%, bezogen auf das gesamte abgepackte Konzentrat),
- 0,5 bis 60 Gewichts-% Kräuter, Gemüse, Früchte, Fleisch, Fisch, Krustentiere oder teilchenförmige Bestandteile davon (Gewichts-%, bezogen auf das gesamte abgepackte Konzentrat),
- 0,6% bis 7% (Gewichts-%, bezogen auf den Wassergehalt des Konzentrates) eines Geliermittels, das die Kombination aus Xanthan und Johannisbrotgummi (Locust Bean Gum (LBG)) umfasst, wobei die Konzentration des Geliermittels zu berechnen ist als (Menge des Geliermittels / (Menge des Geliermittels + Gesamtfeuchtigkeitsmenge),
- 15 bis 30% (Gewichts-%, bezogen auf den Wassergehalt des Konzentrates, bevorzugter 15 bis 26%) Salz, wobei die Konzentration des Salzes zu berechnen ist als (Menge des Salzes) / (Menge des Salzes + Gesamtfeuchtigkeit),
wobei das Konzentrat das Aussehen eines Gels oder die Rheologie eines Gels hat, wie es/sie durch das Verhältnis von Elastizitätsmodul G':viskoser Modul G" von wenigstens 1 ausgedrückt wird,
- wobei die Portion des Konzentrates, wie es abgepackt ist, so ist, dass das Konzentrat ein Gewicht (ausschließlich Verpackung) von 10 g bis 10 kg hat.

20. Konzentrat nach Anspruch 19, das außerdem 1 bis 30%, vorzugsweise 1 bis 15% (Gewichts-%, bezogen auf das gesamte abgepackte Konzentrat) an emulgiertem Öl und/oder Fett umfasst.

21. Konzentrat nach Anspruch 19 oder 20, wobei die konzentrierte Bouillon eine Bouillon liefert, indem die konzentrierte Bouillon mit einer wässrigen Flüssigkeit unter Anwendung von Wärme in einem Verhältnis von 1:15 bis 1:50 verdünnt wird.

22. Verfahren zur Herstellung eines Konzentrates zur Herstellung einer Bouillon, einer Brühe, einer Suppe, einer Soße, einer Bratensoße oder zur Verwendung als Würze, wobei das Konzentrat umfasst:
• 20 bis 80% Wasser (Gewichts-%, bezogen auf das gesamte abgepackte Konzentrat),
• 0,5 bis 60 Gewichts-% Kräuter, Gemüse, Früchte, Fleisch, Fisch, Krustentiere, oder teilchenförmige Bestandteile davon (Gewichts-%, bezogen auf das gesamte abgepackte Konzentrat),
• 0,1 bis 10% (Gewichts-%, bezogen auf den Wassergehalt des Konzentrates, vorzugsweise 0,2 bis 7%, stärker bevorzugt 0,6 bis 3%) eines Geliermittels, das die Kombination aus Xanthan und Johannisbrotgummi (locust bean gum (LBG)) umfasst, wobei die Konzentration des Geliermittels zu berechnen ist als (Menge des Geliermittels / (Menge des Geliermittels + Gesamtfeuchtigkeitsmenge),
• 15 bis 30% (Gewichts-%, bezogen auf den Wassergehalt des Konzentrates, bevorzugter 15 bis 26%) Salz, wobei die Konzentration des Salzes zu berechnen ist als (Menge des Salzes) / (Menge des Salzes + Gesamtfeuchtigkeit),
wobei das Konzentrat das Aussehen eines Gels hat, wobei das Verfahren die Schritte des Mischens der Bestandteile mit dem Wasser, des Einfüllens in die Verpackung und des Verschließens der Verpackung umfasst, wobei vorzugsweise ein Erwärmungsschritt vor, während oder nach dem Einfüllen in die Verpackung eingesetzt wird.

23. Verfahren gemäß Anspruch 22, wobei Xanthan und LBG jeweils in einer Menge von 30 bis 70% (vorzugsweise 40 bis 60%, stärker bevorzugt etwa 50%), bezogen auf die gesamte Menge an Xanthan + LBG, vorliegen.

24. Verfahren nach Anspruch 22 oder 23, wobei zumindest ein Teil der Erwärmungsphase bei einer Temperatur von mindestens 70°C stattfindet.

25. Verwendung eines Konzentrats nach Anspruch 1 bis 19 zur Herstellung einer Bouillon oder Suppe.

26. Verwendung nach Anspruch 25, wobei das Konzentrat eine konzentrierte Bouillon ist und eine Bouillon liefert, indem die konzentrierte Bouillon mit einer wässrigen Flüssigkeit unter Anwendung von Wärme verdünnt wird, wobei die konzentrierte Bouillon umfasst
- 20 bis 80% Wasser (Gewichts-%, bezogen auf das gesamte abgepackte Konzentrat),
- 0,5 bis 60 Gewichts-% Kräuter, Gemüse, Früchte, Fleisch, Fisch, Krustentiere oder teilchenförmige Bestandteile davon (Gewichts-%, bezogen auf das gesamte abgepackte Konzentrat),
- 0,6 bis 7% (Gewichts-%, bezogen auf den Wassergehalt des Konzentrates) eines Geliermittels, das die Kombination aus Xanthan und Johannisbrotgummi (Locust Bean Gum (LBG)) umfasst, wobei die Konzentration des Geliermittels zu berechnen ist als (Menge des Geliermittels / (Menge des Geliermittels + Gesamtfeuchtigkeitsmenge),
- 15 bis 30% (Gewichts-%, bezogen auf den Wassergehalt des Konzentrats, bevorzugter 15 bis 26%) Salz, wobei die Konzentration des Salzes zu berechnen ist als (Menge des Salzes) / (Menge des Salzes + Gesamtfeuchtigkeit),
wobei das Konzentrat das Aussehen eines Gels oder die Rheologie eines Gels hat, wie es/sie durch das Verhältnis von Elastizitätsmodul G': viskoser Modul G" von wenigstens 1 ausgedrückt wird,
- wobei die Portion des Konzentrats, wie es abgepackt ist, so ist, dass das Konzentrat ein Gewicht (ausschließlich Verpackung) von 10 g bis 250 g hat.

27. Verwendung nach Anspruch 26, wobei die konzentrierte Bouillon außerdem 1 bis 30%, vorzugsweise 1 bis 15% (Gewichts-%, bezogen auf das gesamte abgepackte Konzentrat) an emulgiertem Öl und/oder Fett umfasst.

28. Verwendung nach Anspruch 26 oder 27, wobei die konzentrierte Bouillon eine Bouillon liefert, indem die konzentrierte Bouillon mit einer wässrigen Flüssigkeit unter Anwendung von Wärme in einem Verhältnis von 1:15 bis 1:50 verdünnt wird.

29. Verfahren zur Herstellung einer Bouillon, umfassend die Schritte des Verdünnens eines Konzentrats nach mindestens einem der Ansprüche 1 bis 21, wobei das Konzentrat mit einer wässrigen Flüssigkeit unter Anwendung von Wärme verdünnt wird.

30. Verfahren nach Anspruch 29, wobei das Konzentrat in einem Verhältnis von 1:15 bis 1:50 verdünnt wird.

## Revendications

1. Un concentré empaqueté pour la préparation d'un bouillon, d'une soupe, d'une sauce, d'une sauce au jus ou destiné à être utilisé en tant qu'assaisonnement, ledit concentré comprenant :
- 20 à 80 % d'eau (pourcentage en poids établi par rapport au poids total du concentré empaqueté),
- 0,5 à 60 % d'herbes d'assaisonnement, de légumes, de fruits, de viande, de poissons, de crustacés, ou de leurs particules (pourcentage en poids établi par rapport au poids total du concentré empaqueté),
- 0,1 % à 10 % (pourcentage en poids établi par rapport à la quantité d'eau du concentré) d'un agent gélifiant comprenant une combinaison de gomme de xanthane et de gomme de caroube, la concentration d'agent gélifiant étant à calculer en tant que (teneur en agent gélifiant) / (teneur en agent gélifiant + teneur totale en humidité
- 15 à 30 % (pourcentage en poids établi par rapport à la quantité d'eau contenue dans le concentré), préférentiellement 15 à 26 % de sel, la concentration de sel étant à calculer en tant que (teneur en sel / (teneur en sel + teneur totale en humidité),
dans lequel le concentré a l'apparence d'un gel.

2. Concentré selon la revendication 1, dans lequel la gomme de xanthane et la gomme de caroube sont chacune présente en quantité comprise entre 30 et 70 % par rapport à la quantité totale de gommes (xanthane + caroube).

3. Concentré selon la revendication 1 ou 2, dans lequel le concentré a la rhéologie d'un gel.

4. Concentré selon l'une quelconque des revendications 1 à 3, dans lequel le concentré a l'apparence ou la rhéologie d'un gel exprimé par un rapport module élastique G': module de viscosité G" d'au moins 1, préférentiellement d'au moins 3.

5. Concentré selon l'une quelconque des revendications 1 à 4, dans lequel le module de viscosité G" est d'au moins 10 Pa.

6. Concentré selon la revendication 5, dans lequel le module de viscosité G" est d'au moins 50 Pa.

7. Concentré selon l'une quelconque des revendications 1 à 6, dans lequel la quantité d'agent gélifiant comprenant la combinaison d'une gomme de xanthane et d'une gomme de caroube est comprise entre 0,2 et 7 %, préférentiellement 0,6 et 3 %, la concentration d'agent gélifiant étant à calculer en tant que (teneur en agent gélifiant) / (teneur en agent gélifiant + teneur totale en humidité).

8. Concentré selon l'une quelconque des revendications 1 à 7, dans lequel la gomme de xanthane et la gomme de caroube sont présentes chacune en quantité comprise entre 40 et 60 % par rapport à la quantité totale de gomme (xanthane + caroube), préférentiellement en quantité comprise entre 45 et 55 %, plus préférentiellement en quantité d'environ 50 %.

9. Concentré selon l'une quelconque des revendications 1 à 8, dans lequel la teneur en eau totale contenue dans le concentré est de 40 à 60 % en poids (par rapport à la quantité totale de concentré empaqueté).

10. Concentré selon l'une quelconque des revendications 1 à 9, dans lequel le concentré présente une activité d'eau a_{w} de 0,6 à 0,87, préférentiellement de 0,7 à 0,8.

11. Concentré selon l'une quelconque des revendications 1 à 10, comprenant également 0,5 à 30 % (en poids par rapport à la quantité totale de concentré) d'un exhausteur de goût sélectionné parmi le glutamate de monosodium, les 5'-ribotides, les acides organiques, ou leurs mélanges.

12. Concentré selon l'une quelconque des revendications 1 à 11, comprenant également 1 à 30 %, préférentiellement 1 à 15 % (en poids par rapport à la quantité totale de concentré empaqueté) d'huile(s) émulsionnée(s) et/ou de matière(s) grasse(s) émulsionnée(s).

13. Concentré selon l'une quelconque des revendications 1 à 12, dans lequel le concentré se présente sous la forme d'un cube, d'une tablette, d'une pastille, d'une boulette, d'une petite brique, d'une dragée.

14. Concentré selon l'une quelconque des revendications 1 à 13, dans lequel le concentré est empaqueté dans une tasse scellée ou une boîte scellée.

15. Concentré selon l'une quelconque des revendications 1 à 14, dans lequel la partie du concentré tel qu'empaqueté a un poids (en excluant l'emballage) de 10g à 10kg.

16. Concentré selon l'une quelconque des revendications 1 à 15, dans lequel le concentré donne lieu à un bouillon, une soupe, une sauce, une sauce au jus par dilution dudit concentré avec un liquide aqueux en chauffant, préférentiellement dans un rapport de 1:15 à 1:50.

17. Concentré selon l'une quelconque des revendications 1 à 16, dans lequel 30g de concentré se dissout dans 900ml d'eau bouillante en moins de 3,5 minutes, préférentiellement en moins de 3 minutes.

18. Concentré selon l'une quelconque des revendications 1 à 17, dans lequel le concentré est un bouillon concentré.

19. Concentré selon la revendication 18, dans lequel le bouillon concentré donne lieu à un bouillon par dilution dudit bouillon concentré avec un liquide aqueux en chauffant, ledit bouillon concentré comprenant
- 20 à 80 % d'eau (pourcentage en poids établi par rapport au poids total du concentré empaqueté),
- 0,5 à 60 % d'herbes d'assaisonnement, de légumes, de fruits, de viande, de poissons, de crustacés, ou de leurs particules (pourcentage en poids établi par rapport au poids total du concentré empaqueté),
- 0,6 % à 7 % (pourcentage en poids établi par rapport à la quantité d'eau du concentré) d'un agent gélifiant comprenant une combinaison de gomme de xanthane et de gomme de caroube, la concentration d'agent gélifiant étant à calculer en tant que (teneur en agent gélifiant) / (teneur en agent gélifiant + teneur totale en humidité),
- 15 à 30 % (pourcentage en poids établi par rapport à la quantité d'eau contenue dans le concentré), préférentiellement 15 à 26 % de sel, la concentration de sel étant à calculer en tant que (teneur en sel / (teneur en sel + teneur totale en humidité),
dans lequel le concentré a l'apparence d'un gel ou la rhéologie d'un gel exprimé par un rapport module élastique G': module de viscosité G" d'au moins 1,
dans lequel la partie du concentré tel qu'empaqueté à un poids (en excluant l'emballage) de 10g à 10kg.

20. Concentré selon la revendication 19, comprenant également 1 à 30 %, préférentiellement 1 à 15 % (en poids par rapport à la quantité totale de concentré empaqueté) d'huile(s) émulsionnée(s) et/ou de matière(s) grasse(s) émulsionnée(s).

21. Concentré selon la revendication 19 ou 20, dans lequel le bouillon concentré produit un bouillon par dilution dudit bouillon concentré avec un liquide aqueux en chauffant dans un rapport de 1:15 à 1:50.

22. Un procédé pour la préparation d'un concentré pour la préparation d'un bouillon, d'une soupe, d'une sauce, d'une sauce au jus ou destiné à être utilisé en tant qu'assaisonnement, ledit concentré comprenant :
- 20 à 80 % d'eau (pourcentage en poids établi par rapport au poids total du concentré empaqueté),
- 0,5 à 60 % d'herbes d'assaisonnement, de légumes, de fruits, de viande, de poissons, de crustacés, ou de leurs particules (pourcentage en poids établi par rapport au poids total du concentré empaqueté), la concentration d'agent gélifiant étant à calculer en tant que (teneur en agent gélifiant) / (teneur en agent gélifiant + teneur totale en humidité),
- 0,1 % à 10 % (pourcentage en poids établi par rapport à la quantité d'eau du concentré), préférentiellement 0,2 à 7 %, plus préférentiellement 0,6 à 3 %, d'un agent gélifiant comprenant une combinaison de gomme de xanthane et de gomme de caroube,
- 15 à 30 % (pourcentage en poids établi par rapport à la quantité d'eau contenue dans le concentré), préférentiellement 15 à 26 % de sel, la concentration de sel étant à calculer en tant que (teneur en sel / (teneur en sel + teneur totale en humidité),
dans lequel le concentré a l'apparence d'un gel, le procédé comprenant les étapes de mélange des ingrédients avec l'eau, de remplissage et de fermeture des paquets, et dans lequel, préférentiellement, on met en oeuvre une étape de chauffage avant, pendant ou après l'étape de remplissage des paquets.

23. Procédé selon la revendication 22, dans lequel la gomme de xanthane et la gomme de caroube sont chacune présente en quantité comprise entre 30 et 70 % (préférentiellement 40 et 60 %, plus préférentiellement environ 50 %) établie par rapport à la quantité totale de gommes (xanthane + caroube).

24. Procédé selon la revendication 22 ou 23, dans lequel au moins une partie de l'étape de chauffage est réalisée à une température d'au moins 70°C.

25. Utilisation d'un concentré selon l'une quelconque des revendications 1 à 19, pour la préparation d'un bouillon ou d'une soupe.

26. Utilisation d'un concentré selon la revendication 25, dans lequel le concentré est un concentré de bouillon et donne lieu à un bouillon par dilution dudit bouillon concentré avec un liquide aqueux en chauffant, ledit bouillon concentré comprenant
- 20 à 80 % d'eau (pourcentage en poids établi par rapport au poids total du concentré empaqueté),
- 0,5 à 60 % d'herbes d'assaisonnement, de légumes, de fruits, de viande, de poissons, de crustacés, ou de leurs particules (pourcentage en poids établi par rapport au poids total du concentré empaqueté),
- 0,6 % à 7 % (pourcentage en poids établi par rapport à la quantité d'eau du concentré) d'un agent gélifiant comprenant une combinaison de gomme de xanthane et de gomme de caroube, la concentration d'agent gélifiant étant à calculer en tant que (teneur en agent gélifiant) / (teneur en agent gélifiant + teneur totale en humidité),
- 15 à 30 % (pourcentage en poids établi par rapport à la quantité d'eau contenue dans le concentré), préférentiellement 15 à 26 % de sel, la concentration de sel étant à calculer en tant que (teneur en sel / (teneur en sel + teneur totale en humidité),
dans lequel le concentré a l'apparence d'un gel ou la rhéologie d'un gel exprimé par un rapport module élastique G': module de viscosité G" d'au moins 1,
dans lequel la partie du concentré tel qu'empaqueté à un poids (en excluant l'emballage) de 10g à 250g.

27. Utilisation d'un concentré selon la revendication 26, dans lequel le concentré de bouillon comprend également 1 à 30 %, préférentiellement 1 à 15 % (en poids par rapport à la quantité totale de concentré empaqueté) d'huile(s) émulsionnée(s) et/ou de matière(s) grasse(s) émulsionnée(s).

28. Utilisation d'un concentré selon la revendication 26 ou 27, dans lequel le concentré de bouillon donne lieu à un bouillon par dilution dudit bouillon concentré avec un liquide aqueux en chauffant dans un rapport de 1:15 à 1:50.

29. Un procédé pour la préparation d'un bouillon comprenant une étape de dilution d'un concentré selon l'une quelconque des revendications 1 à 21 dans lequel le concentré est dilué avec un liquide aqueux en chauffant.

30. Procédé selon la revendication 29, dans lequel ledit concentré est dilué dans un rapport 1:15 à 1:50.
